# EUROPÄISCHE PATENTANMELDUNG

(11) **EP 1 994 816 A1**
(43) Veröffentlichungstag der Anmeldung: **26.11.2008**
(21) Anmeldenummer: 07010059.9
(22) Anmeldetag: 21.05.2007
(51) Int. Cl.: A01D 45/26, B65B 25/04

(54) **Erntefahrzeug**

(71) Anmelder: Behr AG, 21220 Seevetal (DE)
(72) Erfinder: Behr, Jens-Rudolf, D-21435 Stelle (DE); Van de Pavert, Jos B. M. Th. W., NL-7076 AG Varsselder (NL); Van de Pavert, Ron W. M., NL-7081 CN Gendringen (NL)
(74) Vertreter: Raffay & Fleck

(57) **Zusammenfassung**

Um ein Fahrzeug (1) für die Ernte von Gemüse und anderen Feldfrüchten, insbesondere von Salat, mit einem Fahrgestell (3) und einer auf dem Fahrgestell (3) montierten, in ihrer Haupterstreckung quer zu einer Fahrtrichtung des Fahrzeuges (1) angeordneten Arbeitsbühne (4), so weiterzubilden, dass es bei einer im wesentlichen gleich bleibend hohen Arbeitsgeschwindigkeit eine frühzeitige und schützende Verpackung der Feldfrüchte erlaubt, wird vorgeschlagen, dass bei einem solchen Fahrzeug (1) auf der Arbeitsbühne (4) in Richtung deren Haupterstreckung gesehen nebeneinander wenigstens zwei Verpackungseinheiten (2) zum automatischen, einzelnen und/oder chargenweisen Verpacken, vorzugsweise Folieren, des geernteten Gemüses oder der anderen geernteten Feldfrüchte angeordnet sind, deren Arbeitsrichtung quer zu der Haupterstreckung der Arbeitsbühne (4) verläuft.

## Beschreibung

Die Erfindung betrifft ein Fahrzeug für die Ernte von Gemüse und/oder anderen Feldfrüchten, insbesondere von Salat, mit den Merkmalen des Oberbegriffes des Patentanspruches 1.

Während insbesondere die Getreideernte heutzutage weitgehend vollautomatisiert durchgeführt werden kann mit Mähdreschern, die in einem Arbeitsgang die Halme schneiden, das Korn aus den Ähren dreschen, die Körner von dem Stroh, der Spreu und sonstigen Verunreinigungen trennen und bis zu einem gewissen Fassungsvermögen einlagern und dabei von einer einzigen Person bedient werden können, ist die Ernte anderer Feldfrüchte, insbesondere von Gemüse auch heute noch wesentlich aufwendiger. So müssen z.B. Salatköpfe (Kopfsalat, Eisbergsalat oder dgl.) auch heute noch von Erntehelfern per Hand geschnitten werden. Eine gewisse Erleichterung bei der Ernte verschaffen dabei Erntehilfsgeräte bzw. Fahrzeuge gemäß dem Oberbegriff des Anspruches 1. Diese stellen eine Art fahrbarer Arbeitsbühne zur Verfügung, auf die die von Hand geernteten Gemüse (Salatköpfe, Kohlköpfe oder dgl.) aufgeladen und dort von weiteren Hilfskräften sortiert und z.B. in Kisten abgepackt werden können. Ein Beispiel für ein solches Erntefahrzeug ist in der WO 84/01877 offenbart. Bei dem dort offenbarten Fahrzeug ist auf einem Fahrgestell eine sich quer zur Fahrtrichtung erstreckende Arbeitsplattform bzw. -bühne installiert, die quer zur Fahrtrichtung nebeneinander angeordnete Arbeits- bzw. Ernteplätze schafft, an denen geerntete Feldfrüchte auf das Fahrzeug verbracht und dort von Hilfspersonen weiterverarbeitet werden können. Für eine einfachere Weiterverarbeitung sind Fördereinrichtungen quer zur Fahrtrichtung und in Fahrtrichtung vorgesehen, auf denen Kisten mit den eingebrachten Feldfrüchten transportiert und letztlich für eine weitere Verarbeitung gesammelt werden können.

Weitere Vorschläge für Erntefahrzeuge sind z.B. in der DE 299 16 556 U1 oder der DE 33 47 521 A1 gegeben. Das Erntefahrzeug gemäß der erstgenannten DE 299 16 556 umfasst u. a. einen sich in Fahrtrichtung erstreckenden Waschtunnel, in dem das geerntete Gemüse bereits an Bord des Erntefahrzeuges gewaschen bzw. gereinigt werden kann.

Heutzutage ist es üblich, Gemüse und andere Feldfrüchte insbesondere aus hygienischen Gründen zu verpacken, um diese während des Transportes und auch für die Präsentation in einem Verkaufsgeschäft zu schützen. So werden beispielsweise Salatköpfe, insbesondere Eisbergsalat, aber auch andere Blattsalate wie Radiccio und dgl. in Folie verpackt transportiert und angeboten. Dieses Verpacken dient dabei nicht ausschließlich hygienischen Zwecken, es soll auch eine Beschädigung der empfindlichen Feldfrüchte verhindern.

Bei Salaten, wie insbesondere Eisbergsalat wird eine Einzelverpackung (Folierung) derzeit zentral nach der Ernte vorgenommen in eigens dafür eingerichteten und ausgelegten Hallen. Die vom Feld abgeernteten Salatköpfe werden mit anderen Worten lose z.B. in Kisten verpackt vom Feld abtransportiert und in einer geeigneten Sammelstelle gesammelt. Dort erst erfolgt ein Abpacken der einzelnen Salatköpfe in eine Folie. Dabei ist es bekannt, dass Verpacken (Einwickeln) der Salatköpfe in eine Folie automatisiert vorzunehmen, wofür z.B. in der DE 695 03 519 eine entsprechende Vorrichtung beschrieben ist. Die dort beschriebene Vorrichtung ist für den stationären Einsatz wie oben beschrieben ausgelegt.

Das zuvor beschriebene Verfahren hat verschiedentliche Nachteile:

Zum einen erfordert ein zentrales Verpacken an einer stationären Sammelstelle ein zusätzliches und weiteres Handling der zu verpackenden Salatköpfe oder des anderen Gemüses, was zu einem erhöhten Arbeitsaufwand und damit zu einem gesteigerten Kostenaufwand führt. Zum anderen sind die empfindlichen Gemüse, z.B. Salatköpfe, in der Phase ihrer Verarbeitung zwischen der Ernte auf dem Feld über die kistenweise Verpackung und den Transport zu der zentralen Verpackungsstelle und dem weiteren Handling bis zur eigentlichen Verpackung nicht geschützt. Sie können während dieser Phasen verschmutzen (z.B. mit lebensmittelrechtlich bedenklichen Substanzen, wie z.B. Schmierstoffen auf dem Erntefahrzeug oder anderen während dieser Verarbeitung genutzten Fahrzeugen), oder Sie können beschädigt werden (im Falle eines Salates z.B. durch Blattbrüche, die zu einem frühzeitigen Welken führen).

Es ist daher Aufgabe der vorliegenden Erfindung, ein Fahrzeug für die Ernte von Gemüse und anderen Feldfrüchten der eingangs genannten Art dahingehend weiterzubilden, dass es die oben genannten Nachteile zu vermeiden hilft.

Erfindungsgemäß wird diese Aufgabe gelöst durch ein Fahrzeug für die Ernte von Gemüse und anderen Feldfrüchten gemäß dem Oberbegriff des Patentanspruches 1, welches sich dadurch auszeichnet, dass auf der Arbeitsbühne in Richtung deren Haupterstreckung gesehen nebeneinander wenigstens zwei Verpackungseinheiten zum automatischen, einzelnen und/oder chargenweisen Verpacken, vorzugsweise Folieren, des geernteten Gemüses oder der anderen geernteten Feldfrüchte angeordnet sind, deren Arbeitsrichtung quer zu der Haupterstreckung der Arbeitsbühne verläuft.

Mit einer "chargenweise" Verpackung von Gemüse oder anderen Feldfrüchten ist die Verpackung von mehr als einer Feldfrucht, einem zusammenhängenden Gemüsegewächs in einer gemeinsamen Verpackung gemeint, nicht aber das Abpacken mehrere so chargenweise verpackten Feldfrüchte in größere Umverpackungen wie etwa Kisten oder Kartons. Als Beispiel für ein solches chargenweises Verpacken seien das Zusammenfassen von zwei oder mehr (typischerweise bis zu fünf) Brokkoli-Stengeln zu einer in Folie verpackten Einheit, die Verpackung von z.B. drei Paprikaschoten in einem Folienbeutel oder dergleichen genannt.

Mit einem erfindungsgemäßen Fahrzeug ist es möglich, geerntetes Gemüse oder andere Feldfrüchte unmittelbar nach dem eigentlichen Erntevorgang (bei Salat z.B. dem Schnitt) noch auf dem Fahrzeug einzeln oder chargenweise zu verpacken, z.B. zu folieren, und so vor weiteren schädlichen Umwelteinflüssen zu schützen. Die so unmittelbar nach der Ernte verpackten Feldfrüchte sind mithin nicht mehr anfällig für etwaige hygienisch bedenkliche Verschmutzungen oder Beschädigungen, die zu einem frühen Welken führen können.

Dadurch, dass quer zu der Haupterstreckung der Arbeitsbühne gesehen nebeneinander wenigstens zwei Verpackungseinheiten angeordnet sind, können diese parallel zueinander die geernteten Feldfrüchte verpacken, ohne dass es zu einem "Stau" oder einer erheblichen Reduzierung der Erntegeschwindigkeit kommt. Üblicherweise werden mit Fahrzeugen, wie sie im Oberbegriff des Patentanspruches 1 geschildert sind, nämlich mehrere Pflanzreihen von Feldfrüchten parallel abgeerntet, wobei in der Regel für eine bestimmte Anzahl von dem Fahrzeug überfahrener Pflanzreihen an der Arbeitsbühne ein Arbeitsplatz für einen die Feldfrüchte einbringenden Erntehelfer vorgesehen ist.

Mit besonderem Vorteil sind nicht lediglich zwei, sondern vielmehr wenigstens fünf, vorzugsweise wenigstens sieben solche Verpackungseinheiten nebeneinander auf der Arbeitsbühne angeordnet (vgl. Patentanspruch 2), insbesondere eine bis zwei Verpackungseinheit(en) für jeden nach Pflanzreihen angeordneten Arbeitsplatz eines Erntehelfers.

Dies erlaubt es, trotz des auf dem erfindungsgemäßen Fahrzeug zusätzlich durchgeführten Schrittes des einzeln oder chargenweisen Verpackens des Gemüses oder der anderen Feldfrüchte unverändert die Arbeitsgeschwindigkeit einer nicht in erfindungsgemäßer Weise ausgestatteten Vorrichtung, z.B. einer wie in der WO 84/01877 offenbarten Vorrichtung, beizubehalten.

Da Gemüse und andere mit Hilfe des erfindungsgemäßen Fahrzeuges zu erntende Feldfrüchte häufig sehr nah am Boden wachsen und in gebückter Haltung dort geerntet werden müssen, führt eine vorteilhafte Ausgestaltung des erfindungsgemäßen Fahrzeuges, wie sie in Anspruch 3 angegeben ist, zu einer Vereinfachung des Ablaufes und trägt zu einer raschen Arbeitsgeschwindigkeit bei. Ein in kniender oder gebückter Haltung arbeitender Erntehelfer braucht das von ihm geerntete Gemüse dann nur auf der in seiner Arbeitshöhe befindlichen Ablage abzulegen, von dort aus wird es mit dem Transportmittel automatisch bis zu einer Eingangsseite einer zugehörigen Verpackungseinheit weitertransportiert. Hier vermeidet eine wie in Anspruch 4 angegebene Ausgestaltung weiter die Ausbildung von Verarbeitungsengpässen, da jede Verpackungseinheit über eine separate Ablage und ein Transportmittel verfügt. Das Transportmittel ist dabei einfach durch ein umlaufendes Endlosförderband gebildet. Wie in einer in Anspruch 5 spezifizierten vorteilhaften Weiterbildung vorgesehen, kann die Ablage durch wenigstens eine an dem Endlosförderband festlegbare, mit diesem im festgelegten Zustand mitlaufende Aufnahme gebildet sein. Diese Aufnahme kann insbesondere in Form eines Aufnahmekorbes realisiert sein, und es können insbesondere eine Vielzahl solcher Aufnahmen, insbesondere Aufnahmekörbe, an dem Endlosförderband angeordnet sein, die im Betrieb an einer auf einer Arbeitshöhe eines Erntehelfers befindlichen Aufladeposition vorbei streichen.

Selbstverständlich ist es von besonderem Vorteil, wenn die Taktungen des Transportmittels (Endlosförderbandes) und der Verpackungseinheit aufeinander abgestimmt sind, so dass die der der Verpackungseinheit zu geförderten zu verpackenden Feldfrüchte auch sicher verpackt werden können, ohne dass es zu einem Rückstau in dem Transportmittel kommt.

Ist das erfindungsgemäße Fahrzeug, wie es eine Weiterbildung gemäß Anspruch 7 vorsieht, mit einem wie dort beschriebenen Stand oder Sitz für auf dem Fahrzeug arbeitendes Erntepersonal ausgestattet, so kann auf dem Fahrzeug bzw. auf der Arbeitsbühne in der bekannten und gewohnten Weise eine weitere Verarbeitung (z.B. Sortierung und/oder weitere Verpackung in größeren Verpackungseinheiten (Kisten, Kartons oder dgl.)) vorgenommen werden. Auch diese Bündelung verschiedener Arbeitsschritte auf dem bei der Ernte unmittelbar eingesetzten Fahrzeug erspart während der Verarbeitung des Gemüses Zeit und hilft so letztlich auch, die Logistikzeit insgesamt kurz zu halten und das geerntete Gemüse bzw. die anderen Feldfrüchte so frisch wie möglich dem Endverbraucher anbieten zu können.

Um eine möglichst große Anzahl an Pflanzreihen parallel beernten zu können, sollte die Arbeitsbühne in ihrer Haupterstreckungsrichtung wenigstens 3m, vorzugsweise wenigstens 10m messen (vgl. Anspruch 6). Derzeit sind Fahrzeuge mit einer 12m messenden Arbeitsbühne, entsprechend einer während der Ernte zu erzielenden Arbeitsbreite von 12m, geplant.

Schließlich kann gemäß einer weiteren vorteilhaften Weiterbildung der Erfindung das Fahrzeug, wie in Anspruch 8 vorgesehen, Einrichtungen zum Ablegen und/oder Fördern von leeren und/oder gefüllten Umverpackungen aufweisen. Solche Umverpackungen sind z.B. für Salat Kisten oder Kartons, die auf dem erfindungsgemäßen Fahrzeug leer mitgeführt werden können, wozu bestimmte Ablageplätze vorgesehen sind. Diese leeren Umverpackungen können dann den einzelnen Arbeitsbereichen zugeführt und von dort nach vollständiger Beladung wieder abgeführt und weiter transportiert werden über die entsprechenden Vorrichtungen gemäß Anspruch 7. Zum Beispiel können die vollständig bepackten Umverpackungen in Fahrtrichtung des erfindungsgemäßen Fahrzeuges verbracht werden, beispielsweise zu einem vor dem Fahrzeug fahrenden Lastkraftwagen, der die geernteten Feldfrüchte aufnehmen und anschließend gleich der weiteren Verteilung, z.B. im kürzesten Logistikwege direkt zu einem Zentrallager und/oder einer Verteilstelle, zuführen kann.

Das erfindungsgemäße Fahrzeug ist in einer einfachsten Variante nicht selbstfahrgeeignet, sondern muss von einem Zugfahrzeug, z.B. einem davor gespannten Lastkraftwagen oder einem Traktor, gezogen werden. Es spricht jedoch nichts dagegen, das erfindungsgemäße Fahrzeug auch selbstfahrtauglich auszugestalten.

Aus den obigen Ausführungen wird bereits klar, dass mit dem erfindungsgemäßen Fahrzeug ein Erntehilfsgerät zur Verfügung gestellt wird, welches eine zügige und für die geernteten Feldfrüchte aus hygienischer Sicht wie auch im Hinblick auf mögliche Verletzungen dieser empfindlichen Güter optimierte Ernte ermöglicht, ohne eine Einbuße in der Erntegeschwindigkeit hinnehmen zu müssen.

Weitere Vorteile und Merkmale des erfindungsgemäßen Fahrzeuges ergeben sich aus der nachfolgenden Beschreibung eines Ausführungsbeispiels anhand der beigefügten Figuren. Dabei zeigen:
- Fig. 1: schematisch eine seitliche Ansicht eines erfindungsgemäßen Erntefahrzeuges,
- Fig. 2: eine schematische Ansicht des Erntefahrzeuges aus Fig. 1 von oben,
- Fig. 3: eine schematische Ansicht des Erntefahrzeuges aus Fig. 1 von oben mit angeschlossener Lagerplattform,
- Fig. 4: eine schematische Ansicht des Erntefahrzeuges aus Fig. 1 von der Seite mit angeschlossener Lagerplattform und
- Fig. 5: eine schematische Frontalansicht des Erntefahrzeuges aus Fig. 1.

Die Figuren und die folgende Beschreibung sind nicht beschränkend, sonder geben nur beispielhaft eine mögliche Ausführungsform der Erfindung an. Insbesondere zeigen alle Figuren lediglich schematische Darstellungen, die teilweise stark vereinfacht sind.

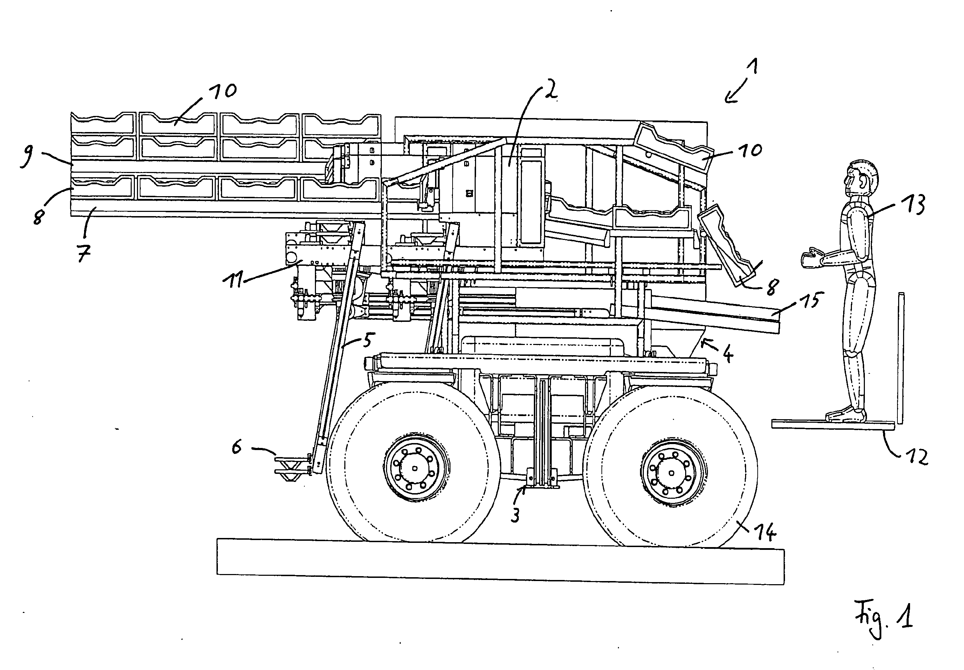

Fig. 1 zeigt eine seitliche Ansicht eines erfindungsgemäßen Erntefahrzeuges 1. Das hier gezeigt Erntefahrzeug 1 ist modular aufgebaut. Gezeigt ist hier ein aus zwei Einheiten mit jeweils 12 m Breite zusammengesetztes Erntefahrzeug 1. Die Einheiten sind mittig zusammen gekuppelt. Beide Einheiten weisen daher alle für den Betrieb nötigen Einrichtungen auf. Jede Einheit beinhaltet somit ein Fahrgestell 3 mit Rädern 14 sowie eine Arbeitsbühne 4. Das hier gezeigte Fahrgestell 3 basiert auf Rädern 14. Ausführungen mit Ketten oder anderen Mitteln sind ebenfalls denkbar. Die Arbeitsbühne 4 erstreckt sich senkrecht zur Zeichnungsebene und beinhaltet zahlreiche Elemente. In der Regel sind der Arbeitsbühne 4 alle neben dem Fahrgestell 3 und den zu einer Lagerplattform führenden Fördermittel 7, 9 vorhandenen Elemente zuzurechnen. Hierzu zählt beispielsweise auch ein Stand für Hilfsarbeiter 13, der hier als Gang 12 ausgeführt ist.

In erfindungswesentlicher Weise sind auf der Arbeitsbühne 4 quer zur Fahrtrichtung nebeneinander Verpackungseinheiten 2 angeordnet. Diese haben eine Arbeitsrichtung, die sich im wesentlichen in Fahrtrichtung des Erntefahrzeugs 1 erstreckt. Durch diese benachbarte Anordnung von Verpackungseinheiten 2 kann der Schritt des einzelnen oder chargenweisen Verpackens des geernteten Obstes bzw. Gemüses in einer rationalen und eine zügige Arbeitsgeschwindigkeit erlaubenden Weise unmittelbar auf dem Erntefahrzeug durchgeführt werden.

Auch der Arbeitsablauf lässt sich in dieser Ansicht nachvollziehen, wobei weitere Details des Erntefahrzeugs benannt werden. Exemplarisch wird hier der Ernte- und Abpackvorgangs eines Salatkopfes beschrieben. Der Vorgang ist aber auch auf andere Früchte übertragbar. Auch können in einer Verpackungseinheit 2 mehrere Stücke chargenweise zusammen abgepackt werden. Hier soll zur Vereinfachung der Beschreibung jedoch der Vorgang der Ernte, des Beförderns und Abpackens eines einzelnen Salatkopfes beschrieben werden.

Ein hinter den Rädern 14 her laufender Arbeiter / Erntehelfer (nicht gezeigt) schneidet den Salatkopf und legt ihn auf eine Ablage 6. Diese ist wie das Fördermittel 5 Teil eines getakteten Umlaufsystems, dass kontinuierlich arbeitet. Durch die Gewichtskraft des Salatkopfes wird ein Festlegemechanismus ausgelöst, so dass die Ablage 6 mit einem Fördermittel 5 in Form eines umlaufenden Riemens oder einer solchen Kette verbunden und die Ablage 6 aufwärts bewegt wird. Ist die Ablage 6 am Ende des Fördermittels 5 angelangt, wird der Salaltkopf in der Ablage 6 auf ein weiteres Fördermittel, hier ein horizontales Transportmittel 11, überführt und zur Verpackungseinheit 2 transportiert. Es ist ebenfalls denkbar, dass das Fördermittel 5 direkt am Eingang der Verpackungseinheit 2 endet oder die Salatköpfe ohne Ablage 6 weiter zum Eingang der Verpackungseinheit 2 transportiert werden. In diesem Ausführungsbeispiel wird der Salatkopf am Eingang der Verpackungseinheit 2 von der Ablage 6 getrennt. Die Ablage 6 wird anschließend über das horizontale Transportmittel und das Fördermittel 5 wieder zum Arbeiter transportiert, um erneut für ein Bestücken mit einem Salatkopf bereit zu stehen. In der Position am unteren Ende des Fördermittels 5 ist sie nicht fest mit dem diesem verbunden. Erst das Einlegen eines Salatkopfes sorgt dafür, dass der oben erwähnte Festlegmechanismus erneut ausgelöst wird.

In die Verpackungseinheit 2 überführt, wird der Salatkopf auf bekannte Weise verpackt. Nach dem Verpacken wird der verpackte Salatkopf zu einer Ausgabe 15 transportiert. Der Ausgabe 15 gegenüber in einem Gang 12 steht ein Hilfsarbeiter 13. Der Gang 12 ist Teil der Arbeitsbühne 4 und mit dieser verbunden. (Die Verbindung ist in Fig. 1 nicht dargestellt.) Der Hilfsarbeiter 13 entnimmt den Salatkopf der Ausgabe 15 und legt ihn in eine Kiste. Dabei können die Feldfrüchte durch den Hilfsarbeiter 13 z.B. auch nach verschiedenen Kriterien sortiert werden.

Zur Arbeitserleichterung sind sowohl Förderbänder 7 für gefüllte Kisten 8, als auch Förderbänder 9 für leere Kisten 10 vorhanden. Dadurch kann der Hilfsarbeiter 13 ununterbrochen Feldfrüchte aus der Ausgabe 15 in Kisten überführen, die nach dem Befüllen mit meist mehreren verpackten Feldfrüchten über die Fördereinrichtung, die hier als Förderband 7 ausgebildet ist, abtransportiert werden.

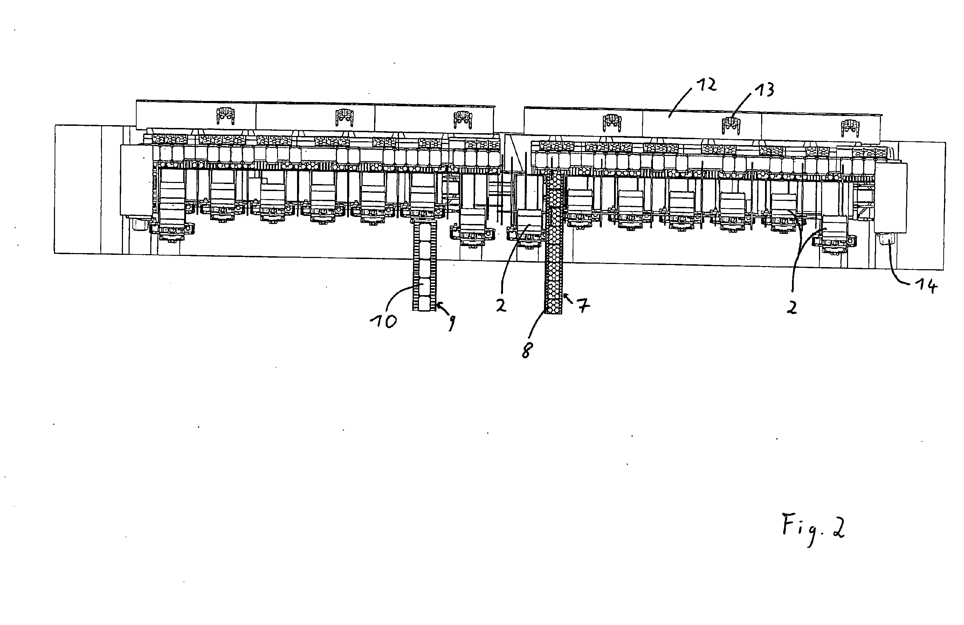

Fig. 2 zeigt eine Ansicht von oben, auf ihr ist die Erstreckung der Arbeitsbühne 4 deutlich zu erkennen. Auf dieser Arbeitsbühne 4 sind hier vierzehn Verpackungseinheiten 2 quer zur Fahrtrichtung gesehen nebeneinander angeordnet. Auf dem Gang 12 arbeiten jedoch zum gezeigten Zeitpunkt nur 6 Hilfsarbeiter 13, so dass jeder Hilfsarbeiter 13 mehrere Verpackungseinheiten 2 zu bedienen hat.

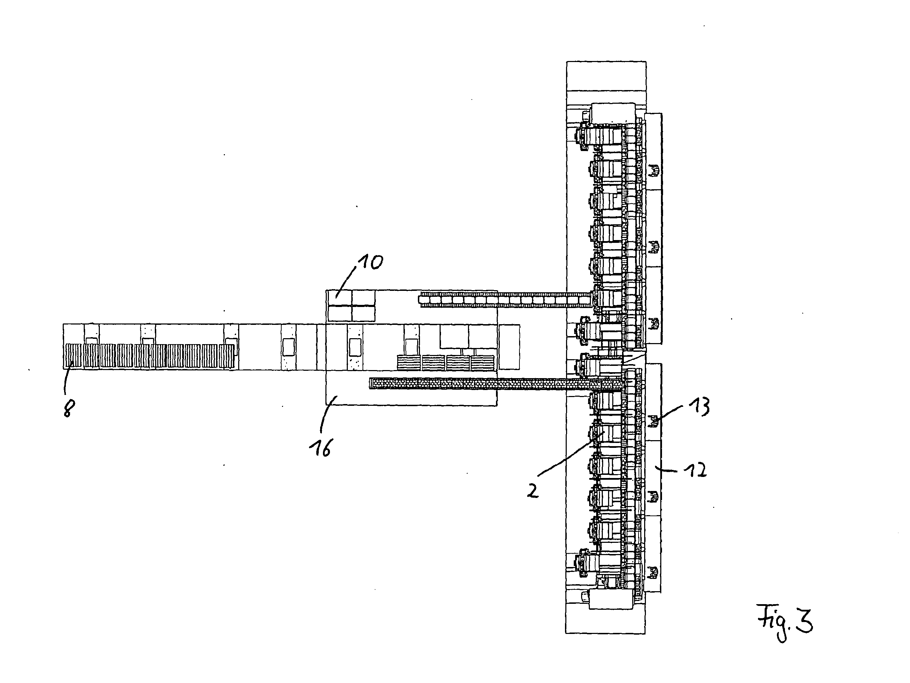

Fig. 3 zeigt ebenfalls eine Ansicht von oben. Allerdings ist hier zusätzlich eine Lagerplattform 16 gezeigt, zu der das Förderband 7 für gefüllte Kisten 8 führt und von der das Förderband 9 für leere Kisten 10 startet. Auf dieser Lagerplattform 16 können leere Kisten 10 vorgehalten und gefüllte Kisten 8 gelagert werden.

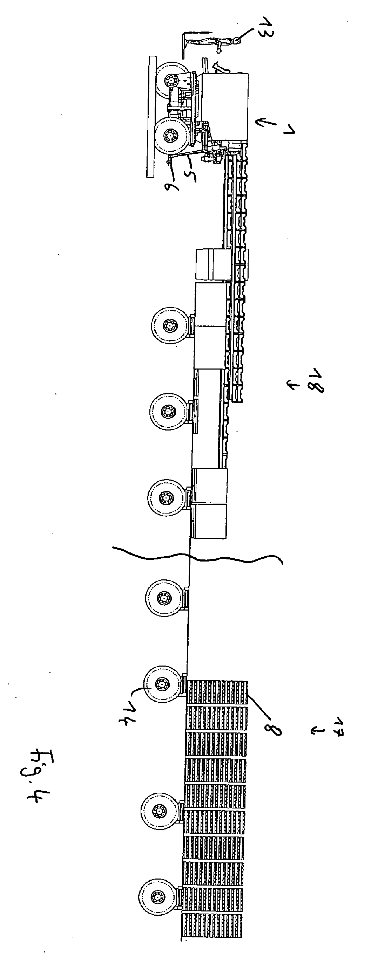

Fig. 4 zeigt ein erfindungsgemäßes Erntefahrzeug 1 mit Förderbändern 7, 9 für leere 10 und gefüllte 8 Kisten, sowie einer Lagerplattform 16. Die Lagerplattform 16 besteht aus zwei Fahrzeugen 17, 18. Das erste Fahrzeug mit 6 Rädern ist ein Stapel- und Palettierungsfahzeug 18 und dient dem Stapeln und palettieren der Ware. Das zweite mit 8 Rädern ist ein Feldtransportfahrzeug 17 und dient dem Abtransport der fertigen Ware und der Belieferung mit Leergut. Dieses Feldtransportfahrzeug 17 kann auch für den Betrieb auf öffentlichen Straßen eingerichtet und zugelassen sein. Zusammen bilden sie die Lagerplattform 16. Diese kann entweder an ein Zugfahrzeug angekuppelt werden, selbst Antriebsmittel aufweisen oder durch im Erntefahrzeug vorgesehene Antriebsmittel fortbewegt werden.

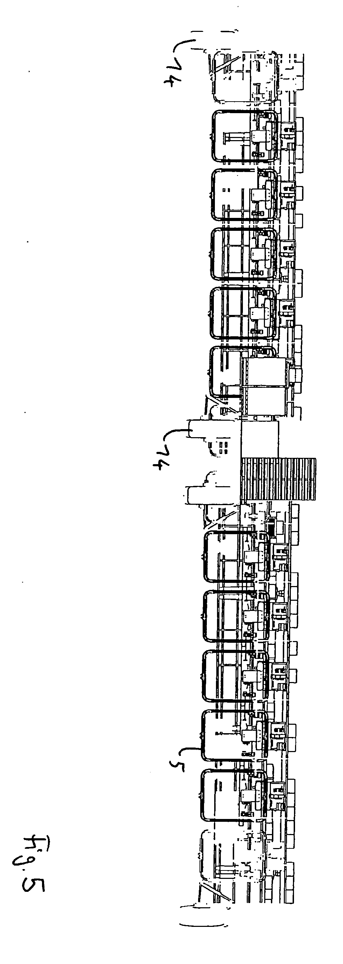

Fig. 5 zeigt eine Ansicht des Erntefahrzeuges 1 in Fahrtrichtung gesehen von der Rückseite her. Auch hier ist die Erstreckung der Arbeitsbühne 4 senkrecht zu Fahrtrichtung deutlich zu erkennen. Ebenfalls gezeigt sind hier die Fördermittel 5.

### Bezugszeichenliste:

- 1: Erntefahrzeug
- 2: Verpackungseinheit
- 3: Fahrgestell
- 4: Arbeitsbühne
- 5: Fördermittel
- 6: Ablage
- 7: Förderband für gefüllte Kisten
- 8: Gefüllte Kisten
- 9: Förderband für leere Kisten
- 10: Leere Kiste
- 11: Horizontales Transportmittel
- 12: Gang
- 13: Hilfsarbeiter
- 14: Rad
- 15: Ausgabe
- 16: Lagerplattform
- 17: Feldtransportfahrzeug
- 18: Stapel- und Palettierfahrzeug

## Patentansprüche

1. Fahrzeug für die Ernte (1) von Gemüse und anderen Feldfrüchten, insbesondere von Salat, mit einem Fahrgestell (3) und einer auf dem Fahrgestell (3) montierten, in ihrer Haupterstreckung quer zu einer Fahrtrichtung des Fahrzeuges angeordneten Arbeitsbühne (4), **dadurch gekennzeichnet, dass** auf der Arbeitsbühne (4) in Richtung deren Haupterstreckung gesehen nebeneinander wenigstens zwei Verpackungseinheiten (2) zum automatischen, einzelnen und/oder chargenweisen Verpacken, vorzugsweise Folieren, des geernteten Gemüses oder der anderen geernteten Feldfrüchte angeordnet sind, deren Arbeitsrichtung quer zu der Haupterstreckung der Arbeitsbühne (4) verläuft.

2. Fahrzeug (1) nach Anspruch 1, **dadurch gekennzeichnet, dass** es wenigstens fünf, vorzugsweise wenigstens sieben, in Richtung der Haupterstreckung der Arbeitsbühne (4) nebeneinander angeordnete Verpackungseinheiten (2) aufweist.

3. Fahrzeug (1) nach einem der vorhergehenden Ansprüche, **dadurch gekennzeichnet, dass** es in einer Ebene unterhalb der Arbeitsbühne (4) gelegene Ablagen (6) zum Ablegen des geernteten Gemüses bzw. der geernteten anderen Feldfrüchte sowie Transportmittel (5, 11) für einen automatischen Weitertransport des auf den Ablagen (6) abgelegten Gemüses bzw. der anderen Feldfrüchte zu einer Eingangsseite einer Verpackungseinheit (2) aufweist.

4. Fahrzeug (1) nach Anspruch 3, **dadurch gekennzeichnet, dass** je Verpackungseinheit (2) eine Ablage angeordnet ist und dass als Transportmittel (5, 11) jeweils ein zwischen der Ablage und der Eingangsseite der zugeordneten Verpackungseinheit (2) umlaufendes Endlosförderband vorgesehen ist.

5. Fahrzeug (1) nach Anspruch 4, **dadurch gekennzeichnet, dass** die Ablage durch wenigstens eine an dem Endlosförderband festlegbare, mit diesem im festgelegten Zustand mitlaufende Aufnahme (2), insbesondere ein Aufnahmekorb gebildet ist.

6. Fahrzeug (1) nach einem der vorhergehenden Ansprüche, **dadurch gekennzeichnet, dass** die Arbeitsbühne (4) in Richtung ihrer Haupterstreckung ein Maß von mehr als 3m, vorzugsweise mehr als 10m aufweist.

7. Fahrzeug (1) nach einem der vorhergehenden Ansprüche, **dadurch gekennzeichnet, dass** es auf einer den Ausgangsseiten der Verpackungseinheiten (2) zugewandten Seite einen Stand (12) und/oder wenigstens einen Sitz für auf dem Fahrzeug arbeitendes Erntepersonal (13) aufweist.

8. Fahrzeug (1) nach einem der vorhergehenden Ansprüche, **dadurch gekennzeichnet, dass** es Einrichtungen zum Ablegen und/oder Fördern (7, 9, 16) von leeren (10) und/oder gefüllten (8) Umverpackungen aufweist.
